# EUROPEAN PATENT APPLICATION

(11) **EP 4 760 112 A1**
(43) Date of publication of application: **17.06.2026**
(21) Application number: 25222850.7
(22) Date of filing: 12.12.2025
(51) Int. Cl.: F04D 29/10, F04D 29/12, F16J 15/34, F16J 15/40

(54) **SEALING ASSEMBLY AND VERTICAL PUMP/MIXER COMPRISING THE SEALING ASSEMBLY**

(30) Priority: 12.12.2024 EP 24219579
(71) Applicant: Sulzer Management AG, 8401 Winterthur (CH)
(72) Inventor: Vainikainen, Jukka, 48601 Kotka (FI)

(57) **Abstract**

A sealing assembly (1) for sealing a rotor shaft (2) for a vertical axis pump / mixer (13) to prevent liquid flow between a housing (3) and the rotor shaft (2), the sealing assembly (1) comprises a stator bush (4) to be fasten to the housing (3), and an upper seal pair (6) and a lower seal pair (7), both comprising a pair of seal rings (8) forming a slide surface between the pair of seal rings (8) and the seal rings (8) are slidable against each other, in each of the pair of seal rings (8), a first seal ring (9) is stationary coupled to the stator bush (4) while a second seal ring (10) is rotatable and coupled to the rotor shaft (2), slide surfaces (60, 70) of both upper seal pair (6) and lower seal pair (7) are cooled / lubricated with sealing liquid (SL) when in use. The stator bush (4) comprises a sleeve (14) forming a weir (15) that configures an annular volume (12) for sealing liquid (SL), the stator bush (4) is provided with a fluid channel (11) that opens to the annular volume (12) for providing sealing liquid (SL) to the annular volume (12), the height of the weir (15) is greater than the level of the slide surface (60) of the upper seal pair (6) in axial direction so that a sealing liquid (SL) level is above the slide surface (60) of the upper seal pair (6)..

## Description

### Technical field

The present invention relates to a sealing assembly according to the preamble of claim 1. The present application generally relates to sealing assemblies, and more particularly to configurations and mechanisms for enhancing the effectiveness of seals in various industrial applications. Related domains include mixing, e.g. dissolving, emulsifying or dispersing, and pumping of liquids.

The present invention relates also to a vertical pump / mixer according to the preamble of the second independent claim.

### Background art

The patent document number EP0443473 discloses a turbocompressor shaft seal, especially for a high-pressure turbocompressor, has each of its gas-side and atmosphere-side slide rings biased toward a rotor ring of the shaft and associated with blocking-liquid compartments which are interconnected by an annular passage around the rotor ring. The compartments are connected in a closed circulation path with a circulating pump and a cooler and leakage liquid is returned by a feed pump to the liquid circulation with the aid of a pressure transformer biased on one side by the gas pressure to be sealed and an adjustable spring force and, on the other side, by the pressure of the blocking liquid. The surface area ratio K between the area of the atmosphere-side slide ring biased by the blocking liquid pressure toward the rotor ring and the sealing area of the atmosphere-side slide ring is substantially 0.45 to 0.60, the thermal conductivity of the slide rings and rotor rings is greater than 250,000 N/mm2 and the thermal conductivities thereof are greater than 70 W/mk. However, this approach presents limitations.

This application addresses the problem of preventing liquid leakage between the housing and the rotor shaft in vertical axis pumps and mixers. An object of the invention is to provide a sealing assembly in which the performance is considerably improved compared to the prior art solutions.

### Disclosure of the Invention

Objects of the invention can be met substantially as is disclosed in the independent claims and in the other claims describing more details of different embodiments of the invention.

The application provides solutions for maintaining effective sealing in environments where variation of rotational speeds and varying pressures can compromise traditional sealing methods. Especially the starting of the pump / mixer is one of the moments when there is possible to run a conventional sealing dry causing significant wear or even damage to the sealings. In some studies, about 70% of the pump/mixer failures, the reason for failure is the mechanical seal. The most common cause of mechanical seal failure is dry running of the slide faces. The present invention prevents dry running because it ensures that an air pocket cannot form on the upper slide faces for the double/dual mechanical seal. The present design incorporates a stator bush with a weir that creates an annular volume for sealing liquid, ensuring that the sealing surfaces remain lubricated and cooled. Additionally, the integration of fluid channels for consistent sealing liquid supply and filtration systems to prevent contamination addresses the challenges of maintaining seal integrity over time, thereby reducing the risk of operational failures and enhancing the longevity of the equipment.

Embodiments of the invention are associated with various advantages and/or technical effects.

According to an embodiment of the invention there is disclosed a sealing assembly for sealing a rotor shaft for a vertical axis pump / mixer to prevent liquid flow between a housing and the rotor shaft, the sealing assembly comprises a stator bush to be fasten to the housing, and an upper seal and a lower seal, both comprising a pair of seal rings forming a slide surface between the pair of seal rings and the seal rings are slidable against each other, in each of the pair of seal rings, a first seal ring is stationary coupled to the stator bush while a second seal ring is rotatable and coupled to the rotor shaft, slide surfaces of both upper seal pair and lower seal pair are cooled / lubricated with sealing liquid when in use. The stator bush comprises a sleeve forming a weir that configures an annular volume for sealing liquid, the stator bush is provided with a fluid channel that opens to the annular volume for providing sealing liquid to the annular volume, the height of the weir is greater than the level of slide surface of the upper seal pair in axial direction so that a sealing liquid level is above the slide surface of the upper seal pair.

The inclusion of a weir that forms an annular volume for sealing liquid ensures a consistent and reliable reservoir of sealing liquid, which enhances the cooling and lubrication of the slide surfaces, thereby reducing wear and extending the service life of the seals.

The height of the weir being greater than the level of the slide surface of the upper seal pair in the axial direction creates a hydrostatic pressure that improves the sealing effectiveness, preventing liquid from leaking past the seal and ensuring the integrity of the pump or mixer operation.

The provision of a fluid channel that opens to the annular volume allows for a controlled and steady supply of sealing liquid, which can be tailored to the operational requirements of the pump or mixer, optimizing performance and reducing maintenance needs.

The watertightness of the sealing assembly provides the advantage of preventing liquid leakage between the housing and the rotor shaft, ensuring efficient operation of the vertical axis pump/mixer.

The conductive properties of the slide surfaces allow for effective heat dissipation, which enhances the longevity and performance of the sealing assembly during operation.

The fluidity of the sealing liquid ensures optimal lubrication and cooling of the seal rings, reducing wear and tear and maintaining the integrity of the sealing surfaces.

The solidification of contaminants is prevented by the filtration system, which provides the advantage of maintaining a clean sealing liquid environment, thereby prolonging the life of the sealing assembly.

The layered design of the sealing assembly allows for effective management of sealing liquid levels, ensuring consistent performance and reliability in various operational conditions.

In a development, the assembly further comprises a sealing liquid being maintained at a constant pressure by an external pressure source. Maintaining the sealing liquid at a constant pressure by an external pressure source ensures a stable sealing environment, which can adapt to fluctuations in operational conditions without compromising the seal's effectiveness. The constant pressure of the sealing liquid minimizes the risk of vaporization or cavitation at the seal faces, which can cause damage and lead to premature failure of the sealing assembly. The external pressure source can be adjusted to compensate for variations in process conditions or wear of the seal faces, thereby maintaining optimal sealing performance over time and reducing downtime.

In a development, the assembly further comprises a fluid channel ending to the annular volume being in axial direction. A fluid channel ending in the annular volume in the axial direction provides a direct path for the sealing liquid to reach the seal faces, ensuring efficient cooling and lubrication without the need for complex routing or additional components. The axial orientation of the fluid channel facilitates a more streamlined design of the stator bush, potentially reducing manufacturing complexity and costs. The design of the axial fluid channel can contribute to a more balanced distribution of sealing liquid, which can lead to more uniform wear of the seal rings and improved reliability of the sealing assembly.

In a development, the assembly further comprises a fluid channel ending to the annular volume being in a radial direction. A fluid channel ending in the annular volume in the radial direction allows for a compact design of the sealing assembly, which can be beneficial in applications where space constraints are a concern. The radial direction of the fluid channel can provide a more even distribution of sealing liquid around the circumference of the seal rings, promoting consistent cooling and lubrication. The radial fluid channel design may facilitate easier access for maintenance or inspection of the sealing assembly, as it does not require disassembly of components aligned axially with the rotor shaft.

In a development, the assembly further comprises a stator bush comprising guiding means to set the stator bush in a correct annular position in relation to the housing when installed. The inclusion of guiding means to set the stator bush in the correct annular position in relation to the housing ensures precise alignment during installation, which is critical for the proper functioning of the sealing assembly and especially the sealing liquid flow. Correct annular positioning of the stator bush reduces the likelihood of seal misalignment, which can lead to uneven wear, leakage, and potential failure of the seal. The guiding means can simplify the installation process, reducing the time and skill required to install the sealing assembly, which can lead to cost savings in labor and reduced potential for installation errors.

In a development, the assembly further comprises a fluid channel being equipped with a filtration system to prevent contaminants from entering the annular volume. The inclusion of the fluid channel equipped with a filtration system enhances the reliability of the assembly by preventing contaminants from entering the annular volume, thereby reducing the risk of damage or wear to the sealing components. The filtration system within the fluid channel ensures the purity of the sealing liquid, which can lead to improved sealing performance and longevity of the seal, minimizing maintenance requirements and operational downtime.

There is disclosed a vertical axis pump / mixer comprising a sealing assembly for sealing a rotor shaft for a vertical axis pump/mixer to prevent liquid flow between a housing and the rotor shaft, the sealing assembly comprises a stator bush to be fasten to the housing, and an upper seal and a lower seal, both comprising a pair of seal rings forming a slide surface between the pair of seal rings and the seal rings are slidable against each other, in each of the pair of seal rings, a first seal ring is stationary coupled to the stator bush while a second seal ring is rotatable and coupled to the rotor shaft, slide surfaces of both upper seal and lower seal are cooled / lubricated with sealing liquid when in use, characterized in that the stator bush comprises a sleeve forming a weir that configures an annular volume for sealing liquid, the stator bush is provided with a fluid channel that opens to the annular volume for providing sealing liquid to the annular volume, the height of the weir is greater than the level of slide surface of the upper seal pair so that a sealing liquid level is above the slide surface is greater than the level of slide surface of the upper seal pair so that the sealing liquid level is above the slide surface of the upper seal pair.

The configuration of the stator bush with a sleeve forming a weir that creates an annular volume for sealing liquid ensures a consistent and adequate supply of sealing liquid to the slide surfaces, which can reduce friction and wear, thereby extending the service life of the seals. The design of the fluid channel opening to the annular volume allows for efficient delivery of sealing liquid, which ensures proper lubrication and cooling of the slide surfaces during operation, leading to enhanced performance and reduced risk of overheating.

In a development, the mixer further comprises sealing liquid supply system being connected to the housing. The integration of a sealing liquid supply system connected to the housing provides a dedicated and controlled flow of sealing liquid to the sealing assembly, which can optimize the seal's performance and prevent the ingress of contaminants. The sealing liquid supply system enables easy maintenance and replenishment of the sealing liquid, which facilitates operational management and ensures that the sealing assembly operates within its intended parameters for maximum efficiency.

The vertical axis pump/mixer wherein a constant pressure of the sealing liquid is maintained at by an external pressure source. The use of an external pressure source to regulate the sealing liquid pressure allows for precise control over the sealing conditions, which can adapt to varying operational demands and enhance the overall reliability and performance of the pump/mixer.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in dependent claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates an overview of a vertical mixer,
Figure 2 illustrates a cross-sectional view of a vertical pump comprising a sealing assembly,
Figure 3 illustrates a sealing assembly according to an embodiment of the invention,
Figure 4 illustrates an embodiment of the fluid channel.
The term "rotor shaft" is used herein to refer to a shaft that rotates a rotor or impeller of a vertical axis pump / mixer.
The term "housing" is used herein to refer to a housing for the rotor shaft.
The term "stator bush" is used herein to refer to a sealing assembly that includes a seal ring and a fluid channel, in the case of a vertical axis pump / mixer, the stator bush may be fixed to the housing.
The term "seal" is used to refer to a seal that prevents fluid from flowing between the housing and the rotor shaft.
The term "upper seal pair" and "lower seal pair" refer to a pair of seal rings that are stationary coupled to each other and located in an upper position or lower position when installed for use.
The term "seal rings" refers to a pair of seal rings that are movable in relation to each other and coupled to each other.
The term "first seal ring" refers to a seal ring that is stationary coupled to the stator bush and non-rotatable.
The term "second seal ring" refers to a seal ring that is coupled to the rotor shaft and rotates along the rotor shaft.
The term "fluid channel" refers to a fluid channel that opens to the annular volume for providing sealing liquid to the annular volume.
The term "annular volume" is used herein to refer to a volume of liquid in the form of an annulus.
The term "sleeve" refers to a shape or part of the stator bush that extends in axial direction and configures an annular volume for sealing liquid. The term "weir" refers to the topmost surface of the sleeve that configures the annular volume for sealing liquid. The height of the weir defines the location of the sealing liquid surface in the axial direction.
The term "vertical axis pump / mixer" refers to a pump or mixer that has a vertical direction rotor shaft and a housing or a device that is configured for mixing liquid.
The term "sealing liquid" refers to a liquid that is used to seal, cool and lubricate the seal rings.
The term "axial direction" refers to an axis of rotation that is parallel to the longitudinal axis, and the term "vertical direction" refers to an axis of rotation that is parallel to the longitudinal axis.
The term "constant pressure" refers to a pressure that is maintained constant by an external pressure source.
The term "correct annular position" refers to the annular position of the stator bush in relation to the housing when installed, so that the fluid channel continuing from the housing to the stator bush is aligned both in circumferential direction and in axial direction.
The term "guiding means" refers to any means that can be used to set the stator bush in a correct annular position when installed.
The term "filtration system" is used herein to refer to a system that can filter contaminants from the sealing liquid to prevent entering the annular volume.

### Detailed Description of Drawings

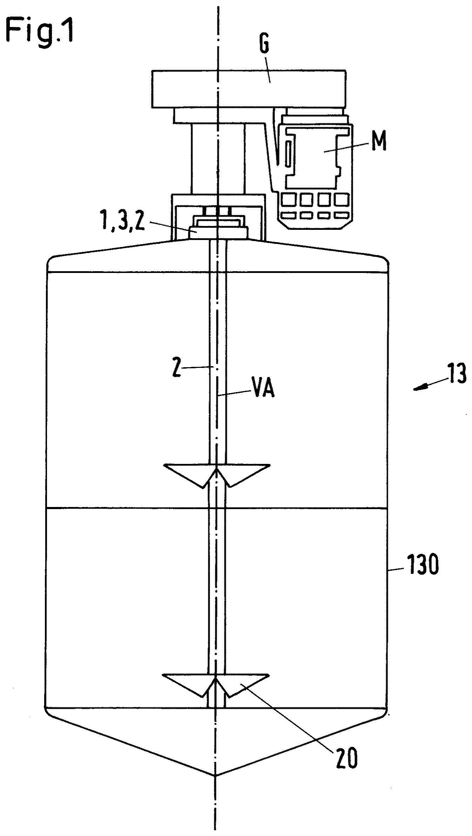

Figure 1 depicts schematically a vertical axis mixer 13 for mixing liquid in a container 130. A rotor 20 is connected to a rotor shaft, further connected to a gear G and a motor M. At the top of the container where the rotor shaft passes the wall of the container, there it is provided a housing 3 to connect the rotor shaft 2 in a rotatably to the container 130. A sealing assembly 1 is used between the rotor shaft 2 and the housing to prevent liquid leakage, to prevent liquid flow between a housing 3 and the rotor shaft 2.

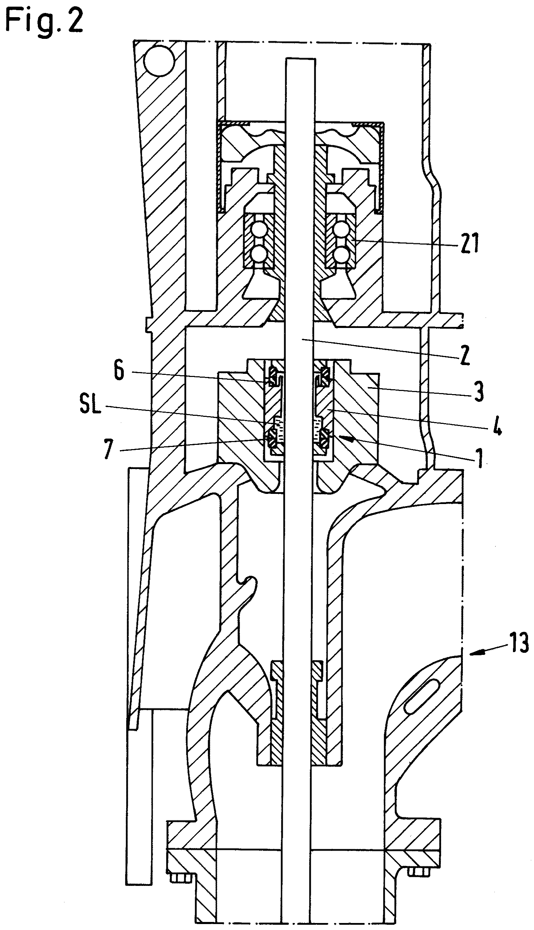

Figure 2 depicts schematically a vertical axis pump 13 comprising a sealing assembly 1 for sealing a rotor shaft 2 for a vertical axis pump / mixer 13 to prevent liquid flow between a housing 3 and the rotor shaft 2, the sealing assembly 1 comprises a stator bush 4 to be fasten to the housing 3, and an upper seal pair 6 and a lower seal pair 7, both upper seal pair 6 and lower seal pair 7 are cooled / lubricated with sealing liquid SL when in use. The sealing assembly 1 also prevents the pumped liquid from entering the bearings 21 that enables the rotation of the rotor shaft 2 in relation to the housing 3.

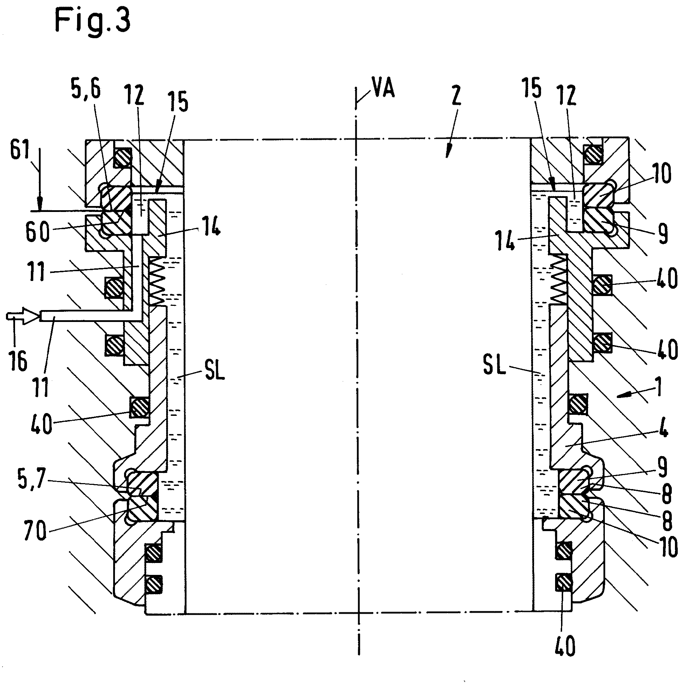

Figure 3 depicts schematically a cross sectional view of a sealing assembly 1 for sealing a rotor shaft 2 for a vertical axis pump / mixer to prevent liquid from flowing between a housing (not shown in Fig. 3) and the rotor shaft 2, the sealing assembly 1 comprises a stator bush 4 to be fasten to the housing, and dual seals 5, comprising an upper seal pair 6 and a lower seal pair 7, both comprising a pair of seal rings 8 forming a slide surface between the pair of seal rings 8 and the seal rings 8 are slidable against each other, in each of the pair of seal rings 8, a first seal ring 9 is stationary coupled to the stator bush 4 while a second seal ring 10 is rotatable and coupled to the rotor shaft 2, slide surfaces 60, 70 of both upper seal pair 6 and lower seal pair 7 are cooled / lubricated with sealing liquid SL when in use. The stator bush 4 comprises a sleeve 14 forming a weir 15 that configures an annular volume 12 for sealing liquid SL, the stator bush 4 is provided with a fluid channel 11 that opens to the annular volume 12 for providing sealing liquid SL to the annular volume 12, the height of the weir 15 is greater than the level 61 of the slide surface 60 of the upper seal pair 6 in axial direction so that a sealing liquid SL level is above the slide surface 60 of the upper seal pair 6.

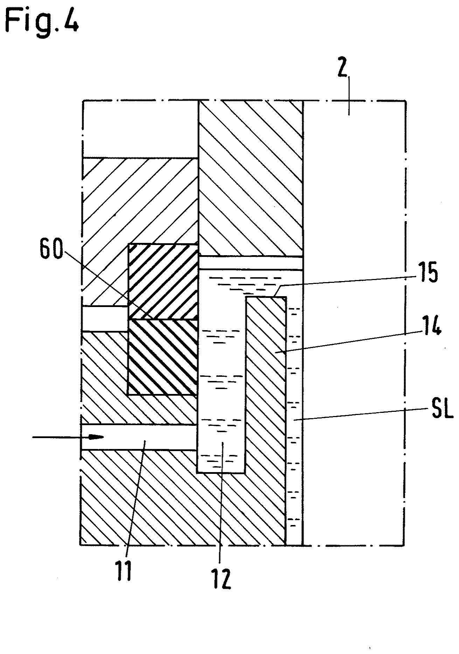

In the Fig 3 it is shown an embodiment wherein the fluid channel 11 ending to the annular volume 12 is in axial direction. Thus, the fluid channel 11 opens to the bottom of the annular volume 12. As an alternative, the fluid channel 11 may end to the annular volume 12 in radial direction as shown in Fig. 4. Basically these are equal alternatives but it depends on the construction of the housing and the stator bush which one is more favorable.

One aspect that needs to be designed is that the stator bush 4 comprises guiding means to set the stator bush 4 in a correct annular position in relation to the housing 3 when installed. As the fluid channel 11 passes through the housing and continues to the stator bush 4, these two sections of the fluid channel 11 need to be aligned to each other. In axial direction the positioning is evident, there may be different diameter notches in the housing and in the stator bush that counter each other. However, as the sealing assembly is more or less rotational symmetric in shape, it is advised that there should be provided some sort of guiding means that ensure the correct annular position. This may be a cotter, wedge, a groove for the cotter / wedge or some other similar structure that forces the annular position or circumferential position to be correct. The stator bush 4 comprises a number of O-rings 40 to seal the stator bush 4 to the housing 3 when installed.

According to an embodiment not shown in the figures, the sealing liquid SL is maintained at a constant pressure by an external pressure source, i.e. a sealing liquid supply system 16 that supplies the sealing liquid to the fluid channel 11. The stator bush 4 comprises an exit outlet for sealing liquid. The exit outlet for the sealing liquid is located at a vertical level between the slide surface of the lower seal pair 70 and the weir 15 so that even if the sealing liquid supply system is not pumping, there will be a small reservoir of sealing liquid both in the annular volume 12 and by the lower seal pair 70 so that neither of these upper seal pair 6 or lower seal pair 7 may run dry.

While the invention has been described herein by way of examples in connection with what are, at present, considered to be the most preferred embodiments, it is obvious to the skilled person that, along with the technical progress, the basic idea of the invention can be implemented in many ways. The invention and its embodiments are thus not limited to the examples and samples described above but they may vary within the contents of patent claims and their legal equivalents. The details mentioned in connection with any embodiment above may be used in connection with another embodiment when such combination is technically feasible.

### REFERENCE NUMERAL LIST

- 1: sealing assembly
- 2: rotor shaft
- 20: rotor / impeller
- 21: bearings
- 3: housing
- 4: stator bush
- 40: O-ring
- 5: seals
- 6: upper seal pair
- 60: slide surface of the upper seal pair
- 7: lower seal pair
- 70: slide surface of the lower seal pair
- 8: seal rings
- 9: first seal rings
- 10: second seal rings
- 11: fluid channel
- 12: annular volume
- 13: vertical axis pump / mixer
- 130: container
- 14: sleeve
- 15: weir
- 16: sealing liquid supply system
- SL: sealing liquid
- VA: vertical axis

## Claims

1. A sealing assembly (1) for sealing a rotor shaft (2) for a vertical axis pump / mixer (13) to prevent liquid flow between a housing (3) and the rotor shaft (2), the sealing assembly (1) comprises a stator bush (4) to be fasten to the housing (3), and an upper seal pair (6) and a lower seal pair (7), both comprising a pair of seal rings (8) forming a slide surface between the pair of seal rings (8) and the seal rings (8) are slidable against each other, in each of the pair of seal rings (8), a first seal ring (9) is stationary coupled to the stator bush (4) while a second seal ring (10) is rotatable and coupled to the rotor shaft (2), slide surfaces (60, 70) of both upper seal pair (6) and lower seal pair (7) are cooled / lubricated with sealing liquid (SL) when in use, **characterized in that** the stator bush (4) comprises a sleeve (14) forming a weir (15) that configures an annular volume (12) for sealing liquid (SL), the stator bush (4) is provided with a fluid channel (11) that opens to the annular volume (12) for providing sealing liquid (SL) to the annular volume (12), the height of the weir (15) is greater than the level of the slide surface (60) of the upper seal pair (6) in axial direction so that a sealing liquid (SL) level is above the slide surface (60) of the upper seal pair (6).

2. The sealing assembly (1) according to the claim 1, wherein a constant pressure of the sealing liquid (SL) is maintained at by an external pressure source.

3. The sealing assembly (1) according to the claim 1, wherein the fluid channel (11) ending to the annular volume (12) is in axial direction.

4. The sealing assembly (1) according to the claim 1, wherein the fluid channel (11) ending to the annular volume (12) is in radial direction.

5. The sealing assembly (1) according to any of the preceding claims, wherein the stator bush (4) comprises guiding means to set the stator bush (4) in a correct annular position in relation to the housing (3) when installed.

6. The sealing assembly (1) according to any of the preceding claims, wherein the fluid channel (11) is equipped with a filtration system to prevent contaminants from entering the annular volume (12).

7. The sealing assembly according to any of the preceding claims, wherein the stator bush (4) comprises a number of O-rings 40 to seal the stator bush (4) to the housing (3) when installed.

8. The sealing assembly according to any of the preceding claims, wherein the stator bush (4) comprises an exit outlet for the sealing liquid (SL).

9. The sealing assembly according to the claim 8, wherein the exit outlet for the sealing liquid is located at a vertical level between the slide surface of the lower seal pair (70) and the weir (15).

10. A vertical axis pump / mixer (13) comprising a sealing assembly (1) for sealing a rotor shaft (2) for a vertical axis pump / mixer (13) to prevent liquid flow between a housing (3) and the rotor shaft (2), the sealing assembly (1) comprises a stator bush (4) to be fasten to the housing (3), and an upper seal pair (6) and a lower seal pair (7), both comprising a pair of seal rings (8) forming a slide surface (60, 70) between the pair of seal rings (8) and the seal rings (8) are slidable against each other, in each of the pair of seal rings (8), a first seal ring (9) is stationary coupled to the stator bush (4) while a second seal ring (10) is rotatable and coupled to the rotor shaft (2), slide surfaces (60, 70) of both upper seal pair (6) and lower seal pair (7) are cooled / lubricated with sealing liquid (SL) when in use, **characterized in that** the stator bush (4) comprises a sleeve (14) forming a weir (15) that configures an annular volume (12) for sealing liquid (SL), the stator bush (4) is provided with a fluid channel (11) that opens to the annular volume (12) for providing sealing liquid (SL) to the annular volume (12), the height of the weir (15) is greater than the level of the slide surface (60) of the upper seal pair (6) in axial direction so that a sealing liquid (SL) level is above the slide surface (60) of the upper seal pair (6).

11. The vertical axis pump/mixer (13) according to the claim 10, wherein a sealing liquid (SL) supply system (16) is connected to the housing (3).

12. The vertical axis pump/mixer (13) according to the claim 10, wherein a constant pressure of the sealing liquid (SL) is maintained at by an external pressure source.
